(19) Europäisches Patentamt
European Patent Office
Office européen des brevets

(11) **EP 4 657 394 A2**

(12) # EUROPEAN PATENT APPLICATION

(43) Date of publication:
**03.12.2025 Bulletin 2025/49**

(21) Application number: **25208104.7**

(22) Date of filing: **10.10.2025**

(51) International Patent Classification (IPC):
***G06V 20/58*** *(2022.01)*

(52) Cooperative Patent Classification (CPC):
**G06V 20/58**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.10.2024 CN 202411423663**

(71) Applicant: **Horizon Journey (Shanghai) Technology Co., Ltd.**
**Shanghai 201306 (CN)**

(72) Inventor: **XU, Qing**
**201306 Shanghai (CN)**

(74) Representative: **Patentanwälte Magenbauer & Kollegen**
**Partnerschaft mbB**
**Plochinger Straße 109**
**73730 Esslingen (DE)**

(54) **VEHICLE DRIVING TRAJECTORY PREDICTION METHOD AND APPARATUS, ELECTRONIC DEVICE, AND STORAGE MEDIUM**

(57) Embodiments of the present disclosure provide a vehicle driving trajectory prediction method and apparatus, an electronic device, and a storage medium. The method includes: determining, based on a surround-view image sequence acquired by a vehicle within a first preset time period prior to a current time point, a BEV feature map sequence of an environment in which the vehicle is located; predicting, based on the BEV feature map sequence, dynamic obstacles within a second preset time period subsequent to the current time point to obtain a dynamic obstacle occupancy map sequence; determining, based on the BEV feature map sequence, a drivable area occupancy map and a static environment feature of the vehicle at the current time point; and predicting a driving trajectory of the vehicle based on the dynamic obstacle occupancy map sequence, the drivable area occupancy map, and the static environment feature.

EP 4 657 394 A2

## Description

### TECHNICAL FIELD

The present disclosure relates to computer vision technologies and autonomous driving technologies, and in particular, to a vehicle driving trajectory prediction method and apparatus, an electronic device, and a storage medium.

### BACKGROUND

In the autonomous driving field or assisted driving field, an in-vehicle environment perception device is typically used to perceive environment information of an environment in which a vehicle is located. Collision prediction, vehicle driving status prediction, and other predictions are performed based on the perceived environment information and vehicle parameters. The vehicle is controlled correspondingly or a driver is prompted correspondingly according to a prediction result. For example, when it is predicted that the vehicle is about to collide, the vehicle is controlled to slow down, steer and the like to avoid collision, or when it is predicted that the vehicle is about to violate traffic rules such as speeding and crossing a solid line, the vehicle is controlled to slow down and adjust a driving direction to avoid violation of the traffic rules.

In related technologies of autonomous driving or assisted driving, object information, in an environment in which a vehicle is located, that affects vehicle trajectory planning may be identified according to an environment image of the environment in which the vehicle is located. Then, a spatiotemporal cost map that includes a temporal dimension and a spatial dimension and that is used for vehicle trajectory planning is generated according to the object information. Then, a planned trajectory for the vehicle is generated based on the spatiotemporal cost map. However, a vehicle trajectory planning method based on a spatiotemporal cost map incurs significant computational overhead in generating the spatiotemporal cost map, resulting in low efficiency of vehicle trajectory planning.

### SUMMARY

To resolve the above technical problem, the present disclosure is provided. Embodiments of the present disclosure provide a vehicle driving trajectory prediction method and apparatus, an electronic device, and a storage medium.

According to one aspect of the embodiments of the present disclosure, a vehicle driving trajectory prediction method is provided, including:

determining, based on a surround-view image sequence acquired by a vehicle within a first preset time period prior to a current time point, a BEV (Bird's-Eye View ) feature map sequence of an environment in which the vehicle is located;

predicting, based on the BEV feature map sequence, dynamic obstacles within a second preset time period subsequent to the current time point to obtain a dynamic obstacle occupancy map sequence;

determining, based on the BEV feature map sequence, a drivable area occupancy map and a static environment feature of the vehicle at the current time point; and

predicting a driving trajectory of the vehicle based on the dynamic obstacle occupancy map sequence, the drivable area occupancy map, and the static environment feature.

According to another aspect of the embodiments of the present disclosure, a vehicle driving trajectory prediction apparatus is provided, including:

a BEV feature map perception module, configured for determining, based on a surround-view image sequence acquired by a vehicle within a first preset time period prior to a current time point, a BEV feature map sequence of an environment in which the vehicle is located;

a temporal prediction module, configured for predicting, based on the BEV feature map sequence, dynamic obstacles within a second preset time period subsequent to the current time point to obtain a dynamic obstacle occupancy map sequence, where the temporal prediction module is further configured for determining a drivable area occupancy map of the vehicle at the current time point based on the BEV feature map sequence; and

a driving trajectory prediction module, configured for determining a static environment feature of the vehicle at the current time point based on the BEV feature map sequence, where the driving trajectory prediction module is further configured for predicting a driving trajectory of the vehicle based on the dynamic obstacle occupancy map sequence, the drivable area occupancy map, and the static environment feature.

According to still another aspect of the embodiments of the present disclosure, a computer readable storage medium is provided, on which a computer program is stored, where the computer program is used for performing the vehicle driving trajectory prediction method described above.

According to yet another aspect of the embodiments of the present disclosure, an electronic device is provided, including:

a processor; and

a memory, configured for storing instructions executable by the processor, where

the processor is configured for reading the executable instructions from the memory, and executing the instructions to implement the vehicle driving trajectory prediction method described above.

Based on the vehicle driving trajectory prediction method and apparatus, the electronic device, and the storage medium that are provided in the foregoing embodiments of the present disclosure, since a surround-view image of an environment in which a vehicle is located includes road condition information such as a nearby obstacle and a drivable area of the vehicle, based on a surround-view image sequence of the environment within a historical time period (that is, a first preset time period prior to a current time point), not only static road condition information, including a drivable area and a nearby obstacle of the vehicle, at the current time point may be determined, but also position change information of dynamic obstacles near the vehicle within a future time period (that is, a second preset time period subsequent to the current time point) may be determined through dynamic position prediction. Then, a dynamic road condition within the future time period may be obtained according to a drivable area occupancy map and a static environment feature that represent a static road condition of the vehicle, in combination with a dynamic obstacle occupancy map sequence representing position change statuses of the dynamic obstacles near the vehicle within the future time period. In this way, an appropriate driving trajectory of the vehicle to a driving destination may be rapidly predicted, thereby helping improve efficiency and flexibility of trajectory generation for the vehicle in an autonomous driving mode or an assisted driving mode. In the embodiments of the present disclosure, without depending on trajectory sampling on a spatiotemporal cost map, the dynamic road condition within the future time period may be predicted through extraction of static road condition information and dynamic obstacle position prediction, so that a safe and appropriate driving trajectory for the vehicle within the future time period may be rapidly predicted.

The technical solutions of the present disclosure are further described in detail below through accompanying drawings and embodiments.

## BRIEF DESCRIPTION OF DRAWINGS

FIG. 1 is a block diagram illustrating a structure of a vision-based vehicle trajectory generation system applicable to the present disclosure;

FIG. 2 is a schematic flowchart illustrating a vehicle driving trajectory prediction method according to an embodiment of the present disclosure;

FIG. 3 is a schematic flowchart illustrating step S4 according to an embodiment of the present disclosure;

FIG. 4 is a schematic flowchart illustrating step S4-3 according to an embodiment of the present disclosure;

FIG. 5 is a schematic flowchart illustrating step S4-4 according to an embodiment of the present disclosure;

FIG. 6 is a diagram illustrating a working principle of an autoregressive model according to an embodiment of the present disclosure;

FIG. 7 is a schematic flowchart illustrating step S4 according to another embodiment of the present disclosure;

FIG. 8 is a schematic diagram illustrating generation of multiple driving trajectories for a current time point according to an example of the present disclosure;

FIG. 9 is a block diagram illustrating a structure of a vehicle driving trajectory prediction apparatus according to an embodiment of the present disclosure;

FIG. 10 is a block diagram illustrating a structure of a driving trajectory prediction module 300 according to an embodiment of the present disclosure;

FIG. 11 is a block diagram illustrating a structure of a driving trajectory prediction module 300 according to another embodiment of the present disclosure;

FIG. 12 is a block diagram illustrating a structure of a driving trajectory prediction module 300 according to still another embodiment of the present disclosure; and

FIG. 13 is a block diagram illustrating a structure of an electronic device according to an embodiment of the present disclosure.

**DETAILED DESCRIPTION OF THE EMBODIMENTS**

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.
It should be noted that the relative arrangement of components and steps, numerical expressions, and numerical values set forth in these embodiments do not limit the scope of the present disclosure, unless otherwise specifically stated.

Overview of Application

In a process of implementing the present disclosure, the inventors found that in use of a vehicle trajectory planning model that samples based on a spatiotemporal cost map, key environment information affecting vehicle trajectory planning in an environment in which a vehicle is located needs to be identified according to an environment image of the environment in which the vehicle is located. The environment information may include fixed obstacle information (which may include a position and a volume of a fixed obstacle), movable obstacle information, traffic sign information, and information about various types of map lines (which may include road curbs and lane lines) in the environment in which the vehicle is located. During driving of the vehicle, positions of the fixed obstacle and traffic signs remain unchanged, a position of the movable obstacle changes in real time, and a drivable area for the vehicle may change, resulting in larger memory overheads for maintaining the spatiotemporal cost map that includes a temporal dimension and a spatial dimension and that is used for assisting in vehicle trajectory sampling.
In addition, flexibility of trajectory patterns is limited by performance of a pre-sampler, and indexing of a cost value on the spatiotemporal cost map according to sampled trajectories is time-consuming in calculation.

Exemplary System

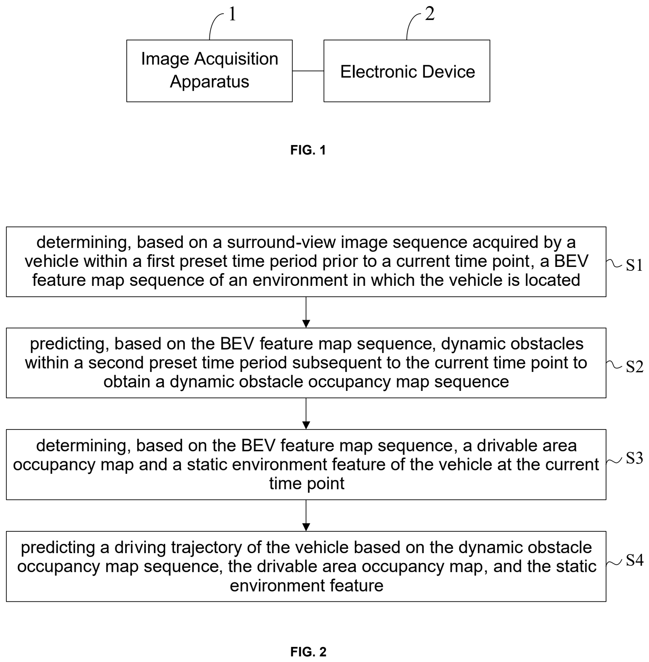

FIG. 1 is a block diagram illustrating a structure of a vision-based vehicle trajectory generation system applicable to the present disclosure. As shown in FIG. 1, the vehicle trajectory generation system may include an image acquisition apparatus 1 and an electronic device 2.
The image acquisition apparatus 1 includes a plurality of onboard cameras disposed at preset positions in a vehicle body and acquire environment images at preset views at a same frequency within a specified historical time period before a current timestamp, so as to facilitate multi-view image feature fusion in a model in a subsequent stage, thus achieving more comprehensive representation of environment information.
The electronic device 2 may be an in-vehicle central control device, or may be a mobile electronic device, including a mobile phone and a tablet computer, in communication connection with an in-vehicle central control device, or may also be a server in communication connection with an in-vehicle central control device.
The electronic device 2 receives a surround-view image sequence of a vehicle within a historical time period (that is, a first preset time period prior to a current time point) that is acquired through the image acquisition apparatus 1, generates, based on the surround-view image sequence, a BEV (Bird's-Eye-View) feature map sequence of an environment, in which the vehicle is located, within the corresponding time period, and then processes the BEV feature map sequence by using a neural network, to generate a dynamic obstacle (which may include, for example, a vehicle, a cyclist, and a pedestrian) occupancy map sequence within a future specified time period (that is, a second preset time period subsequent to the current time point), a static drivable area occupancy map representing a drivable position area for the vehicle within a lane at the current time point, and a static environment feature representing a static road condition feature at the current time point. In this way, a safe and appropriate driving trajectory for the vehicle within the future specified time period may be rapidly predicted according to the static drivable area occupancy map and the static environment feature at the current time point, in combination with the dynamic obstacle occupancy map sequence within the future specified time period. In the embodiments of the present disclosure, a dynamic road condition within a future time period may be predicted through extraction of static road condition information and dynamic obstacle position prediction, so that a safe and appropriate driving trajectory for the vehicle within the future time period may be rapidly predicted. It should be noted that "an appropriate driving trajectory" in this embodiment includes a driving trajectory that has a smallest possible curvature and that is the shortest possible.

Exemplary Method

FIG. 2 is a schematic flowchart illustrating a vehicle driving trajectory prediction method according to an embodiment of the present disclosure, as shown in FIG. 2, including steps:
S1: Determining, based on a surround-view image sequence acquired by a vehicle within a first preset time period prior to a current time point, a BEV feature map sequence of an environment in which the vehicle is located.

The image acquisition apparatus 1 of the system shown in FIG. 1 may be used to periodically acquire surround-view images of the environment in which the vehicle is located within the first preset time period prior to the current time point. A plurality of acquired surround-view images are sorted in a sequential order of time points of acquiring the surround-view images, to obtain a surround-view image sequence within the first preset time period prior to the current time point.

The image acquisition apparatus 1 may include a plurality of onboard cameras disposed at preset positions in the vehicle and having different viewing ranges, and an image data processing device (which may be integrated into a central control system of the vehicle, or may be independent of a central control system of the vehicle). The plurality of onboard cameras may include a front-view camera, a rear-view camera, and side-view cameras. The front-view camera may acquire an environment image directly ahead of the vehicle. The rear-view camera may acquire an environment image directly behind the vehicle. The side-view cameras may acquire environment images from the left-front, the left-rear, the right-front, and the right-rear perspectives of the vehicle. The front-view camera, the rear-view camera, and the side-view cameras periodically acquire environment images synchronously, thus facilitating subsequent generation of a BEV feature map by a model through fusion of multi-view images.

The electronic device 2 may perform feature extraction and feature fusion on the surround-view images at each time point by using, for example, LSS (Lift, Splat, Shoot) method according to a temporal sequence relationship of the surround-view image sequence, to obtain a BEV feature map sequence, that is, a BEV feature map sequence, of the environment in which the vehicle is located.

In an example of the present disclosure, the first preset time period (that is, a historical time period) may be N seconds (N is a real number greater than 0, for example, 1), and an acquisition cycle of the image acquisition apparatus is preset (for example, the acquisition cycle is 0.5 second). It is assumed that the current time point is t, N is set to 1, and the acquisition cycle is 0.5 second, then the surround-view image sequence includes: a surround-view image at a time point (t-2) (that is, 1 second prior to the current time point), a surround-view image at a time point (t-1) (that is, 0.5 second prior to the current time point), and a surround-view image at a time point t. The BEV feature map sequence obtained through feature extraction and fusion of surround-view images includes: a BEV feature map at the time point (t-2), a BEV feature map at the time point (t-1), and a BEV feature map at the time point t.

S2: Predicting, based on the BEV feature map sequence, dynamic obstacles within a second preset time period subsequent to the current time point to obtain a dynamic obstacle occupancy map sequence.

A network model carried in the electronic device may uniformly transform the BEV feature map sequence within the first preset time period (that is, a historical time period) to a coordinate system of an ego vehicle at the current time point for feature fusion, to obtain a single-frame BEV feature map, at the current time point, including historical environment information, and then extract, from the single-frame BEV feature map, position and velocity feature information of a movable obstacle relative to the ego vehicle to generate features that represent position information of dynamic obstacles within the second preset time period (that is, a future time period) subsequent to the current time point, and generate a dynamic obstacle occupancy map sequence.

In an example of the present disclosure, the second preset time period may be M seconds (where M is a real number greater than 0, and may be, for example, 3). Assuming that the current time point is t, then the dynamic obstacle occupancy map sequence includes: an obstacle occupancy map at a time point (t+1) (that is, 0.5 second subsequent to the current time point), an obstacle occupancy map at a time point (t+2) (that is, 1 second subsequent to the current time point), an obstacle occupancy map at a time point (t+3) (that is, 1.5 seconds subsequent to the current time point), an obstacle occupancy map at a time point (t+4) (that is, 2 seconds subsequent to the current time point), an obstacle occupancy map at a time point (t+5) (that is, 2.5 seconds subsequent to the current time point), and an obstacle occupancy map at a time point (t+6) (that is, 3 seconds subsequent to the current time point).

S3: Determining, based on the BEV feature map sequence, a drivable area occupancy map and a static environment feature of the vehicle at the current time point.

The electronic device 2 processes the BEV feature map sequence according to step S2 to obtain a fused single-frame BEV feature map at the current time point and generate a static drivable area occupancy map of the vehicle at the current time point. In addition, the electronic device 2 may further perform image feature extraction on the fused single-frame BEV feature map at the current time point to obtain a static environment feature of the vehicle at the current time point.

It should be noted that a drivable area in this embodiment of the present disclosure is a legal lane area for driving of the vehicle in a driving direction of the vehicle. An impact of a movable obstacle is not considered for the drivable area. In other words, even if a movable obstacle exists in the lane area for driving of the vehicle in the driving direction of the vehicle, an area in which the movable obstacle is located is still considered as a partial area in the drivable area.

S4: Predicting a driving trajectory of the vehicle based on the dynamic obstacle occupancy map sequence, the drivable area occupancy map, and the static environment feature.

The electronic device may autoregressively generate future driving trajectory point coordinates of the vehicle based on a time step sequence based on the predicted dynamic obstacle occupancy map sequence and the static drivable area occupancy map by using a pre-trained autoregressive network model, and obtain a driving trajectory of the vehicle within the future time period according to the future driving trajectory point coordinates.

In this embodiment, because the surround-view image of the environment in which the vehicle is located includes road condition information such as a nearby obstacle and the drivable area of the vehicle, based on the surround-view image sequence of the environment, in which the vehicle is located, within the historical time period (that is, the first preset time period prior to the current time point), not only static road condition information, at the current time point, including the drivable area and the nearby obstacle of the vehicle may be determined, but also position change information of dynamic obstacles near the vehicle within the future time period (that is, the second preset time period subsequent to the current time point) may be determined through dynamic position prediction. Then, a dynamic road condition within the future time period may be obtained based on the drivable area occupancy map and the static environment feature that represent a static road condition of the vehicle, in combination with the dynamic obstacle occupancy map sequence representing position change statuses of the dynamic obstacles near the vehicle within the future time period. In this way, an appropriate driving trajectory of the vehicle to a driving destination may be rapidly predicted, thereby helping improve efficiency and flexibility of trajectory generation for the vehicle in an autonomous driving mode or an assisted driving mode. In this embodiment of the present disclosure, without depending on trajectory sampling on a spatiotemporal cost map, the dynamic road condition within the future time period may be predicted through extraction of the static road condition information and dynamic obstacle position prediction, so that a safe and appropriate driving trajectory for the vehicle within the future time period may be rapidly predicted.

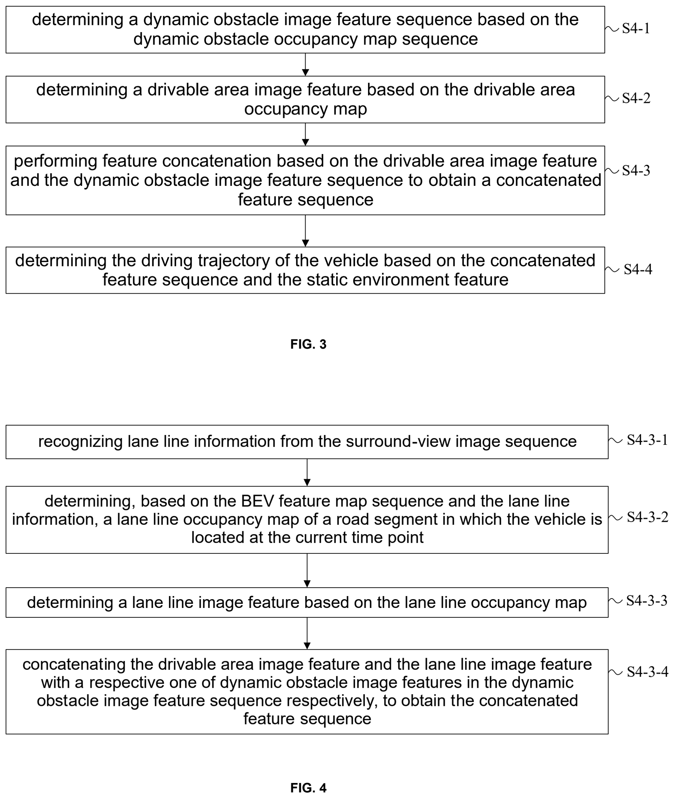

FIG. 3 is a schematic flowchart illustrating step S4 according to an embodiment of the present disclosure. As shown in FIG. 3, step S4 includes steps:

S4-1: Determining a dynamic obstacle image feature sequence based on the dynamic obstacle occupancy map sequence.

A feature extraction network in an image processing model carried in the electronic device 2 of the system shown in FIG. 1 may be used to perform feature extraction and feature compression (which may include feature dimensionality reduction and removal of redundant information from features) on each frame of dynamic obstacle occupancy map in a dynamic obstacle occupancy map sequence of a plurality of time steps within the second preset time period, to correspondingly obtain dynamic obstacle distribution information features of the plurality of time steps within the second preset time period. These dynamic obstacle distribution information features are defined as a dynamic obstacle image feature sequence.

S4-2: Determining a drivable area image feature based on the drivable area occupancy map.

The electronic device 2 may perform feature extraction on the drivable area occupancy map by using the feature extraction network to obtain the drivable area image feature.

S4-3: Performing feature concatenation based on the drivable area image feature and the dynamic obstacle image feature sequence to obtain a concatenated feature sequence.

The electronic device 2 may concatenate the fused drivable area image feature at the current time point with each frame of feature in a multi-frame dynamic obstacle image feature sequence within the second preset time period respectively to obtain a plurality of concatenated features, and sort the plurality of concatenated features according to time steps to obtain a concatenated feature sequence.

S4-4: Determining the driving trajectory of the vehicle based on the concatenated feature sequence and the static environment feature.

The electronic device 2 may use a pre-trained autoregressive trajectory generation model to directly generate a vehicle driving trajectory based on the concatenated feature sequence and the static environment feature of the current time step.

In this embodiment, the dynamic obstacle occupancy map sequence may represent position change information of a nearby obstacle of the vehicle within the future time period (that is, the second preset time period), the drivable area occupancy map remains unchanged within the future time period, and the static environment feature at the current time point may represent a static nearby road condition of the vehicle at the current time point. Therefore, by using a trajectory prediction model to perform feature concatenation on the dynamic obstacle image feature sequence corresponding to the dynamic obstacle occupancy map sequence and the drivable area image feature corresponding to the drivable area occupancy map and perform driving trajectory prediction based on the static environment feature at the current time point, it is possible to rapidly predict a safe and appropriate driving trajectory for the vehicle within the future time period.

FIG. 4 is a schematic flowchart illustrating step S4-3 according to an embodiment of the present disclosure. As shown in FIG. 4, step S4-3 includes steps:

S4-3-1: Recognizing lane line information from the surround-view image sequence.

When a lane line exists in the environment in which the vehicle is located within the first preset time period, the surround-view image sequence includes lane line information. In this case, the electronic device 2 shown in FIG. 1 may be used to perform recognition on the surround-view image sequence to obtain the lane line information. The lane line information may include a lane line position and a lane line attribute. The lane line attribute may include: solid line and dashed line.

S4-3-2: Determining, based on the BEV feature map sequence and the lane line information, a lane line occupancy map of a road segment in which the vehicle is located at the current time point.

The electronic device 2 may generate, based on the BEV feature map sequence and the lane line information, a lane line occupancy map representing a position of a lane centerline of a drivable lane in a driving direction of the vehicle.

S4-3-3: Determining a lane line image feature based on the lane line occupancy map.

The electronic device 2 may perform image feature extraction on the lane line occupancy map by using a feature extraction network, to obtain a lane line image feature.

S4-3-4: Concatenating the drivable area image feature and the lane line image feature with a respective one of dynamic obstacle image features in the dynamic obstacle image feature sequence respectively, to obtain the concatenated feature sequence.

In this embodiment, because positions of the dynamic obstacles change over time while the drivable area and the position of the lane centerline remain unchanged within the future time period (that is, the second preset time period), the concatenated feature sequence obtained by concatenating the drivable area image feature, the lane line image feature, and the dynamic obstacle image feature sequence may represent features of the dynamic obstacles, the lane centerline, and the drivable area in a temporal dimension and a spatial dimension within the second preset time period, and in combination with the static environment feature at the current time point, help rapidly predict a safe and appropriate vehicle driving trajectory within the future time period.

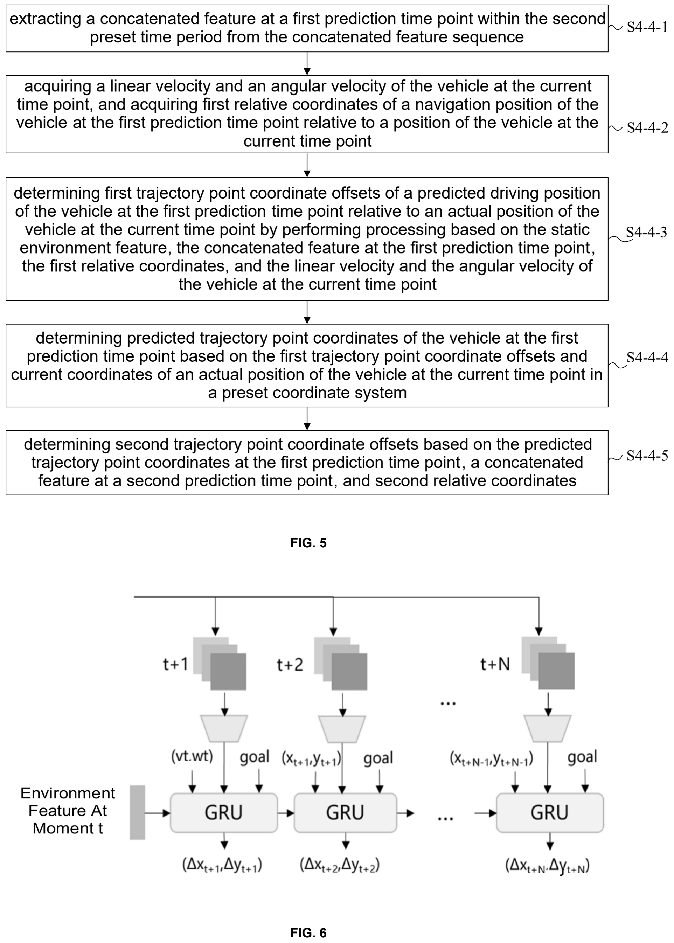

FIG. 5 is a schematic flowchart illustrating step S4-4 according to an embodiment of the present disclosure. As shown in FIG. 5, step S4-4 includes steps:

S4-4-1: Extracting a concatenated feature at a first prediction time point within the second preset time period from the concatenated feature sequence.

FIG. 6 is a diagram illustrating a working principle of an autoregressive model according to an embodiment of the present disclosure. As shown in FIG. 6, it is assumed that the current time point is t, the first prediction time point is t+1, and time points after the first prediction time point are t+2, ..., and t+N, where N is an integer greater than 2.

A concatenated feature at the time point t+1 may be extracted from the concatenated feature sequence by using the electronic device 2 of the system shown in FIG. 1.

S4-4-2: Acquiring a linear velocity and an angular velocity of the vehicle at the current time point, and acquiring first relative coordinates of a navigation position of the vehicle at the first prediction time point relative to a position of the vehicle at the current time point.

The electronic device 2 may acquire a linear velocity vt and an angular velocity wt of the vehicle at the current time point t through the central control system of the vehicle, and may acquire, through navigation software, fixed global target position coordinates (which may include, for example, $(x_{t+1}, y_{t+1}, z_{t+1})$, ..., and $(x_{t+N}, y_{t+N}, z_{t+N})$) of the vehicle within the future time period for the current time point t and denote the coordinates as goal, which may include first relative coordinates, of the navigation position at the first prediction time point relative to the position of the vehicle at the current time point, denoted as $goal_1$.

S4-4-3: Determining first trajectory point coordinate offsets of a trajectory point of the vehicle at the first prediction time point relative to an actual position of the vehicle at the current time point by performing processing based on the static environment feature, the concatenated feature at the first prediction time point, the first relative coordinates, and the linear velocity and the angular velocity of the vehicle at the current time point.

In a direction from left to right in FIG. 6, the electronic device 2 defines gated recurrent units (GRUs) from a processing time point (t+1) to a processing time point (t+N) as $GRU_1$ to $GRU_N$ sequentially, and defines goals input from the time point (t+1) to the time point (t+N) as $goal_1$ to $goal_N$ sequentially.

The electronic device processes, by using $GRU_1$, a static environment feature at the current time point t (that is, an environment feature at a moment t in FIG. 6), a compressed feature vector of a concatenated feature at the time point (t+1) (that is, an output of a corresponding inverted trapezoidal feature compression network at the time point (t+1) in FIG. 6), and relative coordinates of $goal_1$ in a local coordinate system of an ego vehicle at the current time point t, and outputs first trajectory point coordinate offsets ($\Delta x_{t+1}$, $\Delta y_{t+1}$). Three-channel features input to the feature compression network at the time point (t+1) respectively represent a feature of a dynamic obstacle occupancy map, a feature of a drivable area occupancy map, and a feature of a lane line occupancy map at the time point (t+1).

S4-4-4: Determining predicted trajectory point coordinates of the vehicle at the first prediction time point based on the first trajectory point coordinate offsets and current coordinates of an actual position of the vehicle at the current time point in a preset coordinate system.

The electronic device sums the first trajectory point coordinate offsets and the current coordinates to obtain the predicted trajectory point coordinates ($x_{t+1}$, $y_{t+1}$) at the first prediction time point.

S4-4-5: Determining second trajectory point coordinate offsets based on the predicted trajectory point coordinates at the first prediction time point, a concatenated feature at a second prediction time point, and second relative coordinates, where the second prediction time point is a prediction time point next to the first prediction time point within the second preset time period, the second relative coordinates are relative coordinates of a third navigation position relative to the second navigation position, the third navigation position is a navigation position of the vehicle at the second prediction time point, and the second trajectory point coordinate offsets are coordinate offsets of a predicted position of the vehicle at the second prediction time point relative to a predicted position of the vehicle at the first prediction time point.

The processing manner of the electronic device 2 for the time point (t+2) is similar to the processing manner for the time point (t+1), except that the information about the linear velocity and the angular velocity of the ego vehicle are replaced by the predicted trajectory point coordinates ($x_{t+1}$, $y_{t+1}$) at the first prediction time point, and $GRU_2$ processes the predicted trajectory point coordinates ($x_{t+1}$, $y_{t+1}$) at the first prediction time point, the concatenated feature at the time point (t+2), and $goal_2$ at the time point (t+2), and outputs second trajectory point coordinate offsets ($\Delta x_{t+2}$, $\Delta y_{t+2}$).

The processing manner of the electronic device 2 for the time point (t+N) is the same as the processing manner for the time point (t+N-1), and Nth trajectory point coordinate offsets ($\Delta x_{t+N}$, $\Delta y_{t+N}$) may be obtained by analogy.

In this embodiment, each concatenated feature in the concatenated feature sequence may be processed according to a temporal sequence relationship of the concatenated feature sequence by using, for example, a network model including GRUs, to output, step by step, coordinate offsets of the latter time point relative to a previous time point within the second preset time period. In combination with an actual position of the vehicle at the current time point, an appropriate vehicle driving trajectory within the second preset time period may be rapidly predicted.

In an embodiment of the present disclosure, the driving trajectory of the vehicle is determined based on the concatenated feature sequence and the static environment feature by using a trajectory planning model (for example, an autoregressive trajectory generation model). The trajectory planning model is obtained through training by using input samples under supervision of a preset trajectory objective function (which may include, for example, an expert trajectory similarity loss function, a trajectory safety loss function, and a trajectory comfort loss function). The input samples of the trajectory planning model include a historical environment image sequence of a vehicle, a velocity parameter at a current time point, and a historical driving route.

After being pre-trained according to the procedure described in S4, the trajectory planning model may be uploaded to the electronic device to run an inference procedure, which may specifically include steps:

A: extracting the historical environment image sequence from the input samples;

B: generating a historical BEV feature map sequence based on the historical environment image sequence;

C: extracting, from the historical BEV feature map sequence, a global environment feature vector containing historical observation information, and then generating a dynamic obstacle occupancy map sequence within the future time period, a static drivable area occupancy map, and a lane line occupancy map;

D: inputting, into the trajectory planning model, the dynamic obstacle occupancy map sequence within the future time period, the drivable area occupancy map, and the lane line occupancy map, a global environment feature (that is, the static environment feature at the current time point), and the velocity parameter of the vehicle at the current time point, so that the trajectory planning model generates, step by step, future driving trajectory point coordinates for the vehicle;

E: detecting whether a planned trajectory formed based on the future driving trajectory point coordinates generated step by step meets a preset collision-free safety constraint; and

F: if the generated trajectory meets the collision-free safety constraint, directly using the planned trajectory as a final planned trajectory for output; or if the generated trajectory does not meet the collision-free safety constraint, calling a trajectory sampler that is built into the electronic device 2 and that is based on kinematic model inference to evaluate each sampled trajectory, and selecting, as an output, a trajectory having an endpoint closest to a given navigation target point while meeting the safety constraint.

In this embodiment, during the training of the trajectory planning model, coordinates of each planned trajectory within the future time period may be predicted step by step based on the input samples, and then a planned trajectory of the input samples may be predicted. It is detected whether the predicted planned trajectory meets a preset collision-free safety constraint. If the preset collision-free safety constraint is met, it is indicated that the planned trajectory predicted by the trajectory planning model has high safety (no vehicle collision is to occur), and the planned trajectory may be directly output. If the preset collision-free safety constraint is not met, it is indicated that the planned trajectory predicted by the trajectory planning model is not safe enough (there is a risk of vehicle collision). In this case, at least one safe driving trajectory may be predicted and evaluated based on a kinematic model trajectory sampler, and a trajectory with an endpoint closest to a given navigation target point is selected as an output while the safety constraint is met.

In an embodiment of the present disclosure, a trajectory objective function used as supervisory information in a training stage includes three subfunctions: a trajectory similarity subfunction, a trajectory safety subfunction, and a trajectory comfort subfunction.

The trajectory similarity subfunction is a function for calculating a similarity between a predicted driving trajectory and an actual expert driving trajectory. The predicted driving trajectory is output by the trajectory planning model.

In an example of the present disclosure, a trajectory similarity subfunction $l_1$ is expressed as below:

$$l_1 = \begin{cases} \frac{1}{N}\sum_t^{t+N} \|P_t - P_t^g\|^2, & \|P_t - P_t^g\|^2 \le 1 \\ \frac{1}{N}\sum_t^{t+N} \|P_t - P_t^g\|^1, & \|P_t - P_t^g\|^2 > 1 \end{cases}$$

where $\|*\|^1$ and $\|*\|^2$ respectively represent norms l1 and l2 of a vector, $P_t$ represents predicted trajectory coordinates at a moment $t$, $P_t^g$ represents actual trajectory coordinates at the moment $t$.

The trajectory safety subfunction is represented as a function for calculating a collision risk value between a vehicle and an obstacle.

In an example of the present disclosure, safety is represented by a collision probability of other obstacles in a collision risk field of an ego vehicle (a two-dimensional Gaussian probability distribution with a rear axle center point of the ego vehicle as a center), and a collision probability $P_t(x,y) \sim N$ at the moment $t$ may be expressed as:

$$P_t(\mathrm{x,y}) \sim N(\mu = (x_t, y_t), \sigma = \begin{bmatrix} \sigma xx & \sigma xy \\ \sigma yx & \sigma yy \end{bmatrix})。$$

A trajectory safety subfunction $l_2$ is expressed as below:

$$l_2 = \sum_t \sum_{1 \le i \le H} \sum_{1 \le j \le W} P_t(i,j) * S_t(i,j)$$

where $\mu$ represents a two-dimensional Gaussian distribution mean, $P_t(i,j)$ represents a two-dimensional Gaussian probability distribution with the ego vehicle as a center at the moment $t$, and $S_t(i,j)$ represents an obstacle occupancy map at the moment $t$ (where $S$ represents the obstacle occupancy map, represented in a binary form); and Gaussian distribution means $(x_t, y_t)$ are position coordinates of the ego vehicle that are predicted at the moment $t$, variance parameters $\sigma xx$, $\sigma yy$, $\sigma xy$, and $\sigma yx$ all may be manually set (and may be, for example, 6, 12, 0, and 0 in sequence).

The trajectory comfort subfunction is a function for calculating a comfort parameter value of a vehicle. The comfort parameter value is obtained through calculation based on a predicted driving route, historical driving parameters, and a driving parameter threshold.

In an example of the present disclosure, a trajectory comfort subfunction $l_3$ is expressed as below:

$$l_3 = k_1 * \sum_t [v_t - v_{max}]_+ + k_2 * \sum_t ([a_t - a_{max}]_+ + [a_{min} - a_t]_+)$$
$$+ k_3 * \sum_t [j_t - j_{max}]_+$$

where $v_t$ represents a vehicle velocity at the moment $t$, $v_{max}$ represents a vehicle velocity upper limit threshold, $a_t$ represents an acceleration of the ego vehicle at the moment $t$, $a_{max}$ and $a_{min}$ respectively represent an acceleration upper limit threshold and an acceleration lower limit threshold, $j_t$ represents a jerk of the ego vehicle at the moment $t$, $j_{max}$ represents a jerk upper limit threshold, and $k_1$, $k_2$, and $k_3$ respectively represent a vehicle velocity coefficient, an acceleration coefficient, and a jerk coefficient, which are all constants; and $[*]_+$ means that * takes 0 when it is a negative number, or otherwise, no processing is performed.

A preset trajectory objective function $L$ is expressed as below:

$$L = \alpha l_1 + \beta l_2 + \gamma l_3$$

where $\alpha$, $\beta$, and $\gamma$ respectively represent a first weighting coefficient, a second weighting coefficient, and a third weighting coefficient, and $\alpha + \beta + \gamma = 1$.

In this embodiment, a trajectory similarity subfunction that may quantify a similarity between a predicted driving trajectory and an actual driving trajectory, a trajectory safety subfunction that may quantify safety of a predicted driving trajectory, and a trajectory comfort subfunction that may quantify comfort of a predicted driving trajectory are set. Therefore, the similarity, safety, and comfort of the predicted driving trajectory and the actual driving trajectory may be evaluated based on the trajectory similarity subfunction, the trajectory safety subfunction, and the trajectory comfort subfunction, thus enabling a trajectory planning model to predict a vehicle driving trajectory that is highly similar to the actual driving trajectory and has high safety and comfort.

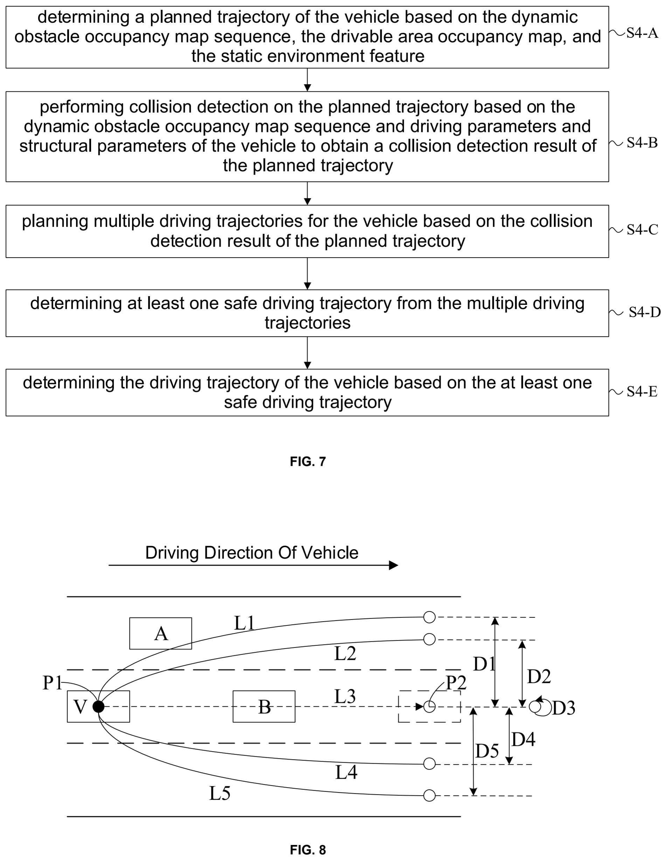

FIG. 7 is a schematic flowchart illustrating step S4 according to another embodiment of the present disclosure. As shown in FIG. 7, step S4 may include steps:

S4-A: Determining a planned trajectory of the vehicle based on the dynamic obstacle occupancy map sequence, the drivable area occupancy map, and the static environment feature.

A manner in which a planned route may be determined by using the electronic device 2 of the system shown in FIG. 1 is similar to the manner of determining a driving route in steps S4-1 to S4-4 in the foregoing embodiment, except that the model in this embodiment is in inference mode, a planned trajectory, after being generated, is not directly used as the final driving trajectory of the vehicle, and the planned trajectory further needs to be detected through steps.

S4-B: Performing collision detection on the planned trajectory based on the dynamic obstacle occupancy map sequence and driving parameters and structural parameters of the vehicle to obtain a collision detection result of the planned trajectory.

The driving parameters of the vehicle may include a vehicle velocity, acceleration, and a steering wheel angle. The structural parameters of the vehicle may include a length and a width of the vehicle, and may further include a wheelbase and a minimum turning radius of the vehicle, etc.

The electronic device 2 may determine a position at each time point within the second preset time period based on the driving parameters of the vehicle, and may accurately detect, in combination with the structural parameters of the vehicle and a dynamic obstacle occupancy map at the corresponding time point, whether the vehicle will collide with a dynamic obstacle at the time point, thereby obtaining a collision detection result at each time point. The collision detection result of the planned trajectory may be generated according to the collision detection result at each time point within the second preset time period. Exemplarily, the collision detection result of the planned trajectory may include: detecting that the vehicle is about to collide within the second preset time period, or detecting that the vehicle will not collide within the second preset time period.

S4-C: Planning multiple driving trajectories for the vehicle based on the collision detection result of the planned trajectory.

When it is detected that the vehicle is about to collide within the second preset time period, the electronic device 2 may plan multiple driving trajectories according to a preset driving trajectory planning rule.

S4-D: Determining at least one safe driving trajectory from the multiple driving trajectories.

At least one safe driving trajectory is determined from the multiple driving trajectories according to a preset safe driving trajectory determination rule.

S4-E: Determining the driving trajectory of the vehicle based on the at least one safe driving trajectory.

A safe driving trajectory may be arbitrarily selected from the at least one safe driving trajectory as a final driving route of the vehicle, or a safe driving trajectory may be selected from the at least one safe driving trajectory as a final driving trajectory of the vehicle according to a preset driving route selection rule. Fitting may be performed on the final driving trajectory of the vehicle obtain a final driving route of the vehicle.

In this embodiment, after a planned trajectory of the vehicle is predicted by using the trajectory planning model, the predicted planned trajectory of the vehicle typically has relatively high safety (with a relatively low probability of vehicle collisions), but there is still a possibility of vehicle collisions. To further reduce the probability of collisions when the vehicle travels along the final planned trajectory, after the planned route of the vehicle is generated, collision detection is performed on the planned route, multiple driving trajectories are planned based on a collision detection result, at least one safe driving trajectory is selected from the multiple driving trajectories, and then, a safe driving trajectory is selected from the at least one safe driving trajectory to generate a final driving route of the vehicle. In such a way, the safety of vehicle driving may be greatly improved.

In an embodiment of the present disclosure, after obtaining the generated trajectory of the autoregressive model, the collision detection may be performed in combination with the dynamic obstacle occupancy map sequence provided by the temporal prediction module at upstream, where in a few cases, there may still be a collision risk. Therefore, this solution additionally adds an action sampler. Taking $(X,Y,\psi)$ as a vehicle state, uniform sampling is conducted within an allowable range for acceleration a and steering wheel angle $\theta$ to obtain a set of candidate action sequences, and these sequences are then substituted into a bicycle kinematic model (as below) to obtain a set of candidate safety trajectories. Under a safety constraint of no collision, a trajectory with an endpoint closest to the target point is selected as the final output. In an embodiment of the present disclosure, step S4-C may include: in response to the collision detection result indicating that the planned trajectory fails in the collision detection (that is, fails in the safety collision detection), forward deducing multiple driving trajectories by a kinematic model based on a planned starting position of the vehicle at the current time point and a plurality of sets of planned driving parameters of the vehicle. The plurality of sets of planned driving parameters correspond one-to-one to the multiple driving trajectories, and each set of planned driving parameters includes planned vehicle velocity information and steering wheel angle information. The kinematic model used for trajectory forward deduction is expressed as below:

$$\begin{cases} X' = V\cos(\varphi + \beta) \\ Y' = V\sin(\varphi+\beta) \\ \varphi' = \frac{V\sin(\beta)}{L_r} \\ v' = a \\ \beta = \tan^{-1}(\frac{L_r}{L_r+L_f}\tan\theta) \end{cases}$$

where $(\ast)'$ represents a derivative of $\ast$; $(\boldsymbol{X},\ \boldsymbol{Y})$ represents coordinates of the vehicle in a world coordinate system at a moment t; $\varphi$ represents a rotation angle of the vehicle body relative to the world coordinate system; a represents the acceleration of the vehicle, which is a preset fixed value (constant); $\theta$ represents a steering wheel angle, which is a preset fixed value; $\beta$ represents a sideslip angle, referring to an angle between a velocity direction at the vehicle's center of mass and a vehicle's longitudinal axis (vehicle orientation); $\boldsymbol{V}$ represents the velocity of the vehicle; $\boldsymbol{L_r}$ represents a distance from a center point of the vehicle to the rear of the vehicle; and $\boldsymbol{L_f}$ represents a distance from the center point of the vehicle to the front of the vehicle.

FIG. 8 is a schematic diagram illustrating generation of multiple driving trajectories for a current time point according to an example of the present disclosure. As shown in FIG. 8, there are three drivable lanes in a driving direction of a vehicle V. From top to bottom in FIG. 8, the three lanes may be defined as a left lane, a current driving lane, and a right lane. When the planned trajectory fails in the collision detection, five corresponding driving trajectories may be generated based on a starting planned position P1 of the vehicle V and five sets of action parameters. The action parameters include: a linear velocity of an ego vehicle at a current time point, a fixed value of a linear acceleration of the vehicle body (the value of the acceleration may be 0), and a fixed value of an angular velocity of the vehicle body. The five driving trajectories specifically include: driving trajectories L1 and L2 for driving into the left lane, a driving trajectory L3 for driving straight along the current driving lane, and driving trajectories L4 and L5 for driving into the right lane. A lateral distance of the driving trajectory L1 is greater than that of the driving trajectory L2, and a lateral distance of the driving trajectory L4 is smaller than that of the driving trajectory L5. The lateral distance of a driving trajectory refers to a distance of the driving trajectory deviated from the current driving lane in a direction perpendicular to the driving direction of the vehicle.

In this embodiment, when the planned trajectory fails in the collision detection, it is represented that a vehicle collision accident may occur when the vehicle drives along the planned trajectory. In this case, a new vehicle driving trajectory needs to be planned. During the planning of the new vehicle driving trajectory, multiple driving trajectories may be rapidly generated based on a planned starting position of the vehicle at the current time point and a plurality of sets of planned driving parameters of the vehicle. This helps select a safe driving trajectory from the multiple driving trajectories as a final driving trajectory of the vehicle, thereby improving safety of the vehicle when driving along the final driving trajectory.

In an embodiment of the present disclosure, step S4-D may include: performing collision detection on the multiple driving trajectories based on the dynamic obstacle occupancy map sequence, the plurality of sets of planned driving parameters and the structural parameters of the vehicle, to obtain collision detection results of the multiple driving trajectories; and determining at least one safe driving trajectory from the multiple driving trajectories based on the collision detection results of the multiple driving trajectories.

After being generated through sampling by using the electronic device 2 of the system shown in FIG. 1, the multiple driving trajectories may separately undergo collision detection to obtain collision detection results of the multiple driving trajectories. The collision detection results of the multiple driving trajectories may include: the vehicle controlled to drive along each of the driving trajectories being about to collide or not to collide with surrounding vehicles within the second preset time period. The electronic device may classify all driving trajectories leading to no collisions as safe driving trajectories.

Referring to FIG. 8, when determining whether any one of the driving trajectory L1 to the driving trajectory L5 is a safe driving trajectory, the electronic device 2 may determine, based on the dynamic obstacle occupancy map sequence, positions of a movable obstacle A and a movable obstacle B at each time point within the second preset time period. The electronic device may determine, based on a currently selected driving trajectory, a position of the vehicle V at each time point within the second preset time period when the vehicle V travels along the currently selected driving trajectory. Based on the position of the movable obstacle A, the position of the movable obstacle B, and the position of the vehicle V at each time point within the second preset time period, as well as structural parameters of the vehicle V, the electronic device 2 may accurately determine whether the currently selected driving trajectory is a safe driving trajectory.

In this embodiment, the dynamic obstacle occupancy map sequence within the future time period (that is, the second preset time period) may provide position changes of dynamic obstacles within the future time period, the driving parameters of the vehicle (for example, the vehicle velocity and the driving direction) may represent a current driving status of the vehicle, and the structural parameters of the vehicle (for example, the length and the width of the vehicle) may represent a lane occupancy position of the vehicle in an aerial view. Therefore, collision detection may be accurately performed on multiple driving trajectories based on the dynamic obstacle occupancy map sequence, the plurality of sets of planned driving parameters and the structural parameters of the vehicle, so that at least one safe driving trajectory may be rapidly and accurately determined from the multiple driving trajectories according to collision detection results of the multiple driving trajectories.

In an embodiment of the present disclosure, step S4-E may include: determining a driving route of the vehicle from the at least one safe driving trajectory based on a distance between an end trajectory point of the at least one safe driving trajectory and a target driving position of the vehicle.

Referring to FIG. 8, for the driving trajectories L1 to L5, lateral distances between the current position P1 of the vehicle and a target driving position P2 are sequentially D1 to D5, and D3 < D < 4 < D2 < D1 = D5. After selecting a set of trajectories that meet the safety constraint, the electronic device may select, from all the safe driving trajectories, a safe driving trajectory whose lateral distance from the target driving position P2 is the smallest, to generate a driving route of the vehicle. For example, while the driving trajectory L2, the driving trajectory L4, and the driving trajectory L5 are all safe driving trajectories, because D4 < D2 < D5, the trajectory L4 whose endpoint is closest to a navigation target point is further selected and output as an optimal trajectory.

In this embodiment, a distance between an end trajectory point of a safe driving trajectory and the target driving position of the vehicle may represent a deviation between the vehicle and the target driving position when the vehicle drives along the safe driving trajectory. Therefore, an appropriate vehicle driving route may be rapidly selected according to the distance between the end trajectory point of the safe driving trajectory and the target driving position of the vehicle.

In another embodiment of present disclosure, after step S4-B, the following steps may be further included:
S4-F: determining, in response to the collision detection result of the planned trajectory indicating that the planned trajectory passes in the collision detection, the planned trajectory as the driving trajectory of the vehicle.

When the electronic device 2 of the system shown in FIG. 1 is used to output the planned trajectory of the vehicle through the pre-trained trajectory planning model, the output of the trajectory planning model typically demonstrates good performance in terms of trajectory similarity, trajectory safety, and trajectory comfort, and thus using the trajectory generated by the model as the final driving trajectory of the vehicle while the trajectory passes in the collision detection may substantially meet user demands for safe, comfortable, and human-like driving of a vehicle.

Any one of the vehicle driving trajectory prediction methods provided in the embodiments of the present disclosure may be performed by any suitable device with a data processing capability, including but not limited to: a terminal device, a server, and the like. Alternatively, any one of the vehicle driving trajectory prediction methods provided in the embodiments of the present disclosure may be performed by a processor. For example, the processor performs, by calling corresponding instructions stored in a memory, any one of the vehicle driving trajectory prediction methods mentioned in the embodiments of the present disclosure. This is not repeated below.

Exemplary Apparatus

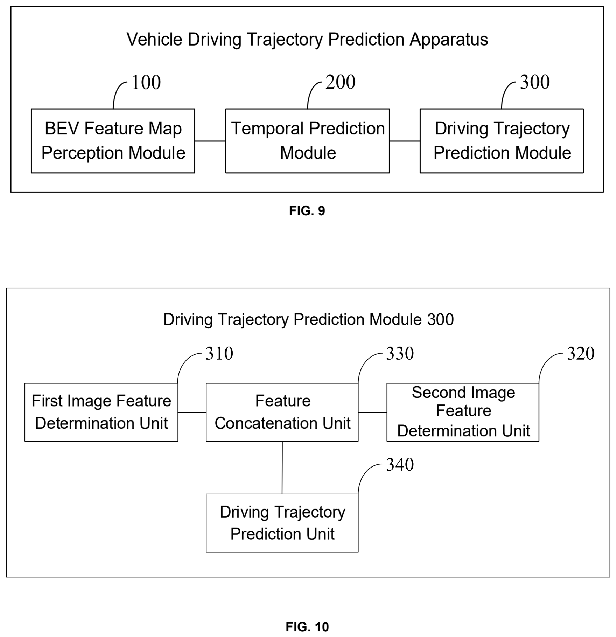

FIG. 9 is a block diagram illustrating a structure of a vehicle driving trajectory prediction apparatus according to an embodiment of the present disclosure, as shown in FIG. 9, including:

a BEV feature map perception module 100, configured for determining, based on a surround-view image sequence acquired by a vehicle within a first preset time period prior to a current time point, a BEV feature map sequence of an environment in which the vehicle is located;

a temporal prediction module 200, configured for predicting, based on the BEV feature map sequence, dynamic obstacles within a second preset time period subsequent to the current time point to obtain a dynamic obstacle occupancy map sequence, where the temporal prediction module is further configured for determining a drivable area occupancy map of the vehicle at the current time point based on the BEV feature map sequence; and

a driving trajectory prediction module 300, configured for determining a static environment feature of the vehicle at the current time point based on the BEV feature map sequence, where the driving trajectory prediction module is further configured for predicting a driving trajectory of the vehicle based on the dynamic obstacle occupancy map sequence, the drivable area occupancy map, and the static environment feature.

FIG. 10 is a block diagram illustrating a structure of a driving trajectory prediction module 300 according to an embodiment of the present disclosure. As shown in FIG. 10, the driving trajectory prediction module 300 includes:

a first image feature determination unit 310, configured for determining a dynamic obstacle image feature sequence based on the dynamic obstacle occupancy map sequence;

a second image feature determination unit 320, configured for determining a drivable area image feature based on the drivable area occupancy map;

a feature concatenation unit 330, configured for performing feature concatenation based on the drivable area image feature and the dynamic obstacle image feature sequence to obtain a concatenated feature sequence; and

a driving trajectory prediction unit 340, configured for determining the driving trajectory of the vehicle based on the concatenated feature sequence and the static environment feature.

In an embodiment of the present disclosure, the vehicle driving trajectory prediction apparatus further includes:

a lane line information recognition module, configured for recognizing lane line information from the surround-view image sequence, where

the temporal prediction module 200 is further configured for determining, based on the BEV feature map sequence and the lane line information, a lane line occupancy map of a road segment in which the vehicle is located at the current time point.

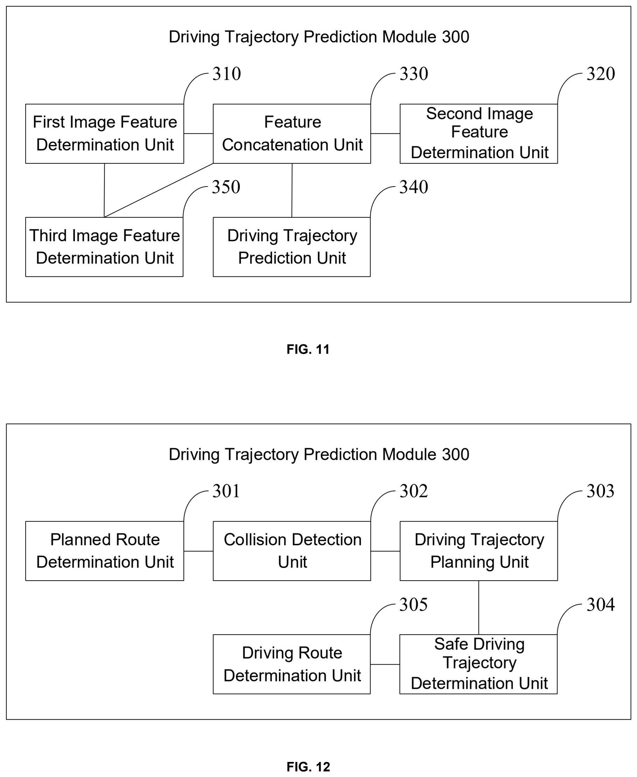

FIG. 11 is a block diagram illustrating a structure of a driving trajectory prediction module 300 according to another embodiment of the present disclosure. As shown in FIG. 11, the driving trajectory prediction module 300 further includes: a third image feature determination unit 350, configured for determining a lane line image feature based on the lane line occupancy map.

The feature concatenation unit 330 is further configured for concatenating the drivable area image feature and the lane line image feature with a respective one of dynamic obstacle image features in the dynamic obstacle image feature sequence respectively, to obtain the concatenated feature sequence.

In an embodiment of the present disclosure, the driving trajectory prediction unit 340 is further configured for extracting a concatenated feature at a first prediction time point within the second preset time period from the concatenated feature sequence.

The driving trajectory prediction unit 340 is further configured for acquiring a linear velocity and an angular velocity of the vehicle at the current time point, and acquiring first relative coordinates of a navigation position of the vehicle at the first prediction time point relative to a position of the vehicle at the current time point.

The driving trajectory prediction unit 340 is further configured for determining first trajectory point coordinate offsets of a predicted driving position of the vehicle at the first prediction time point relative to an actual position of the vehicle at the current time point by performing processing based on the static environment feature, the concatenated feature at the first prediction time point, the first relative coordinates, and the linear velocity and the angular velocity of the vehicle at the current time point.

The driving trajectory prediction unit 340 is further configured for determining predicted trajectory point coordinates of the vehicle at the first prediction time point based on the first trajectory point coordinate offsets and current coordinates of an actual position of the vehicle at the current time point in a preset coordinate system.

The driving trajectory prediction unit 340 is further configured for determining second trajectory point coordinate offsets based on the predicted trajectory point coordinates at the first prediction time point, a concatenated feature at a second prediction time point, and second relative coordinates, where the second prediction time point is a prediction time point next to the first prediction time point within the second preset time period, the second relative coordinates are relative coordinates of a third navigation position relative to the second navigation position, the third navigation position is a navigation position of the vehicle at the second prediction time point, and the second trajectory point coordinate offsets are coordinate offsets of a predicted position of the vehicle at the second prediction time point relative to a predicted position of the vehicle at the first prediction time point.

FIG. 12 is a block diagram illustrating a structure of a driving trajectory prediction module 300 according to still another embodiment of the present disclosure. As shown in FIG. 12, the driving trajectory prediction module 300 includes:

a planned route determination unit 301, configured for determining a planned trajectory of the vehicle based on the dynamic obstacle occupancy map sequence, the drivable area occupancy map, and the static environment feature;

a collision detection unit 302, configured for performing collision detection on the planned trajectory based on the dynamic obstacle occupancy map sequence and driving parameters and structural parameters of the vehicle to obtain a collision detection result of the planned trajectory;

a driving trajectory planning unit 303, configured for planning multiple driving trajectories for the vehicle based on the collision detection result of the planned trajectory;

a safe driving trajectory determination unit 304, configured for determining at least one safe driving trajectory from the multiple driving trajectories; and

a driving route determination unit 305, configured for determining the driving trajectory of the vehicle based on the at least one safe driving trajectory.

In an embodiment of the present disclosure, the driving trajectory planning unit 303 is further configured for determining, in response to the collision detection result of the planned trajectory indicating that the planned trajectory fails in the collision detection, the multiple driving trajectories based on a planned starting position of the vehicle at the current time point and a plurality of sets of planned driving parameters of the vehicle, where the plurality of sets of driving parameters correspond one-to-one to the multiple driving trajectories, and each set of planned driving parameters includes planned vehicle speed information and steering wheel angle information.

In an embodiment of the present disclosure, the safe driving trajectory determination unit 304 is further configured for performing collision detection on the multiple driving trajectories based on the dynamic obstacle occupancy map sequence, the plurality of sets of planned driving parameters and the structural parameters of the vehicle, to obtain collision detection results of the multiple driving trajectories. The safe driving trajectory determination unit 304 is further configured for determining the at least one safe driving trajectory from the multiple driving trajectories based on the collision detection results of the multiple driving trajectories.

In an embodiment of the present disclosure, the driving route determination unit 305 is further configured for determining the driving trajectory of the vehicle from the at least one safe driving trajectory based on a distance between an end trajectory point of the at least one safe driving trajectory and a target driving position of the vehicle.

In another embodiment of the present disclosure, the driving route determination unit 305 is further configured for determining, in response to the collision detection result of the planned trajectory indicating that the planned trajectory passes in the collision detection, the planned trajectory as a driving route of the vehicle.

It should be noted that a specific implementation of the vehicle driving trajectory prediction apparatus in the embodiments of the present disclosure is similar to the specific implementation of the vehicle driving trajectory prediction method in the embodiments of the present disclosure. For details, refer to the section of the vehicle driving trajectory prediction method. To reduce redundancy, the details are not repeated herein.

Exemplary Electronic Device

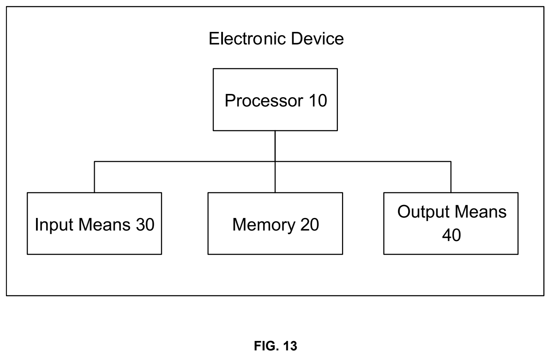

The electronic device according to the embodiments of the present disclosure is described below with reference to FIG. 13. As shown in FIG. 13, the electronic device includes one or more processors 10 and a memory 20.

The processor 10 may be a central processing unit (CPU) or another form of processing unit having a data processing capability and/or an instruction execution capability, and may control another component in the electronic device to perform a desired function.

The memory 20 may include one or more computer program products. The computer program product may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. The computer readable storage medium may store one or more computer program instructions. The processor 11 may run the program instructions to implement the vehicle driving trajectory prediction method described above in the various embodiments of the present disclosure and/or other desired functions. The computer readable storage medium may further store various contents such as an input signal, a signal component, and a noise component.

In an example, the electronic device may further include: an input means 30 and an output means 40. The components are interconnected through a bus system and/or other forms of connection mechanisms (not shown). The input means 30 may be, for example, a keyboard or a mouse. The output means 40 may include, for example, a display, a loudspeaker, a printer, a communication network, and a remote output means connected to the communication network.

Certainly, for simplicity, only some components in the electronic device that are related to the present disclosure are shown in FIG. 13, and components such as a bus and an input/output interface are omitted. Besides, the electronic device may further include any other appropriate components depending on specific applications.

Exemplary Computer Readable Storage Medium

The computer readable storage medium may be one readable medium or any combination of a plurality of readable media. The readable medium may be a readable signal medium or a readable storage medium. The readable storage medium may include, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM or a flash memory), an optical fiber, a portable compact disk ROM (CD-ROM), an optical storage device, a magnetic storage device, or any suitable combination of the above.

Basic principles of the present disclosure are described above in combination with specific embodiments. However, it should be pointed out that the advantages, superiorities, effects, and the like mentioned in the present disclosure are merely examples rather than limitations, and it should not be considered that these advantages, superiorities, effects, and the like are necessary for each of the embodiments of the present disclosure. In addition, specific details described above are merely for examples and for ease of understanding, rather than limitations. The details described above do not limit that the present disclosure must be implemented by using the foregoing specific details.

The embodiments in this specification are described in a progressive manner, each embodiment focuses on differences from other embodiments, and the same or similar parts between the embodiments may be referred to each other. The system embodiment is described in a relatively simple way as it basically corresponds to the method embodiment. For related parts, refer to the partial description of the method embodiment.

The block diagrams of the means, apparatus, devices, and systems involved in the present disclosure are provided as illustrative examples only, and it is not intended to require or imply that they should be connected, arranged, or configured in the manner illustrated in the block diagrams. As a person skilled in the art will appreciate, these means, apparatuses, devices, and systems may be connected, arranged, or configured in any manner. Terms such as "including", "containing", and "having" are open-ended terms, and refer to and may be used interchangeably with "including but not limited to". The terms "or" and "and" as used herein refer to and may be used interchangeably with the term "and/or", unless otherwise clearly stated in the context. The term "such as" as used herein refers to and may be used interchangeably with the term "such as, but not limited to".

The methods and apparatuses of the present disclosure may be implemented in many ways. For example, the methods and apparatuses of the present disclosure may be implemented by software, hardware, firmware, or any combination of software, hardware, and firmware. The above sequence of steps for use in the method is for illustrative purposes only. The steps of the method of the present disclosure are not limited to the sequence specifically described above, unless otherwise specifically stated. In addition, in some embodiments, the present disclosure may alternatively be implemented as programs recorded in a recording medium, and the programs include machine-readable instructions for implementing the methods according to the present disclosure. Therefore, the present disclosure also covers a recording medium storing programs for performing the methods according to the present disclosure.

It should also be noted that, in the apparatuses, devices, and methods of the present disclosure, each component or each step may be decomposed and/or recombined. These decompositions and/or recombinations should be considered equivalent solutions of the present disclosure.

The above description of the disclosed aspects is provided to enable a person skilled in the art to make or use the present disclosure. Various modifications to these aspects will be readily apparent to a person skilled in the art, and the generic principles defined herein may be applied to other aspects without departing from the scope of the present disclosure. Therefore, the present disclosure is not intended to be limited to the aspects shown herein, but rather to the widest scope consistent with the principles and novel features disclosed herein.

The above description has been given for the purposes of illustration and description. In addition, this description is not intended to limit the embodiments of the present disclosure to the forms disclosed herein. Although a plurality of exemplary aspects and embodiments have been discussed above, a person skilled in the art will figure out certain variations, modifications, changes, additions, and subcombinations thereof.

**Claims**

1. A vehicle driving trajectory prediction method, **characterized by** comprising:

   determining (S1), based on a surround-view image sequence acquired by a vehicle within a first preset time period prior to a current time point, a BEV (Bird's-Eye View ) feature map sequence of an environment in which the vehicle is located;
   predicting (S2), based on the BEV feature map sequence, dynamic obstacles within a second preset time period subsequent to the current time point to obtain a dynamic obstacle occupancy map sequence;
   determining (S3), based on the BEV feature map sequence, a drivable area occupancy map and a static environment feature of the vehicle at the current time point; and
   predicting (S4) a driving trajectory of the vehicle based on the dynamic obstacle occupancy map sequence, the drivable area occupancy map, and the static environment feature.

2. The method according to claim 1, wherein the predicting a driving trajectory of the vehicle based on the dynamic obstacle occupancy map sequence, the drivable area occupancy map, and the static environment feature comprises:

   determining (S4-1) a dynamic obstacle image feature sequence based on the dynamic obstacle occupancy map sequence;
   determining (S4-2) a drivable area image feature based on the drivable area occupancy map;
   performing (S4-3) feature concatenation based on the drivable area image feature and the dynamic obstacle image feature sequence to obtain a concatenated feature sequence; and
   determining (S4-4) the driving trajectory of the vehicle based on the concatenated feature sequence and the static environment feature.

3. The method according to claim 2, wherein the performing (S4-3) feature concatenation based on the drivable area image feature and the dynamic obstacle image feature sequence to obtain a concatenated feature sequence comprises:

   recognizing (S4-3-1) lane line information from the surround-view image sequence;
   determining (S4-3-2), based on the BEV feature map sequence and the lane line information, a lane line occupancy map of a road segment in which the vehicle is located at the current time point;
   determining (S4-3-3) a lane line image feature based on the lane line occupancy map; and
   concatenating (S4-3-4) the drivable area image feature and the lane line image feature with a respective one of dynamic obstacle image features in the dynamic obstacle image feature sequence respectively, to obtain the concatenated feature sequence.

4. The method according to claim 2 or 3, wherein the determining (S4-4) the driving trajectory of the vehicle based on the concatenated feature sequence and the static environment feature comprises:

   extracting (S4-4-1) a concatenated feature at a first prediction time point within the second preset time period from the concatenated feature sequence;
   acquiring (S4-4-2) a linear velocity and an angular velocity of the vehicle at the current time point, and acquiring first relative coordinates of a navigation position of the vehicle at the first prediction time point relative to a position of the vehicle at the current time point;
   determining (S4-4-3) first trajectory point coordinate offsets of a predicted driving position of the vehicle at the first prediction time point relative to an actual position of the vehicle at the current time point by performing processing based on the static environment feature, the concatenated feature at the first prediction time point, the first relative coordinates, and the linear velocity and the angular velocity of the vehicle at the current time point;
   determining (S4-4-4) predicted trajectory point coordinates of the vehicle at the first prediction time point based on the first trajectory point coordinate offsets and current coordinates of an actual position of the vehicle at the current time point in a preset coordinate system; and

determining (S4-4-5) second trajectory point coordinate offsets based on the predicted trajectory point coordinates at the first prediction time point, a concatenated feature at a second prediction time point, and second relative coordinates, wherein the second prediction time point is a prediction time point next to the first prediction time point within the second preset time period, the second relative coordinates are relative coordinates of a third navigation position relative to the second navigation position, the third navigation position is a navigation position of the vehicle at the second prediction time point, and the second trajectory point coordinate offsets are coordinate offsets of a predicted position of the vehicle at the second prediction time point relative to a predicted position of the vehicle at the first prediction time point.

5. The method according to any one of claims 1 to 3, wherein the predicting (S4) a driving trajectory of the vehicle based on the dynamic obstacle occupancy map sequence, the drivable area occupancy map, and the static environment feature comprises:

determining (S4-A) a planned trajectory of the vehicle based on the dynamic obstacle occupancy map sequence, the drivable area occupancy map, and the static environment feature;

performing (S4-B) collision detection on the planned trajectory based on the dynamic obstacle occupancy map sequence and driving parameters and structural parameters of the vehicle to obtain a collision detection result of the planned trajectory;

planning (S4-C) multiple driving trajectories for the vehicle based on the collision detection result of the planned trajectory;

determining (S4-D) at least one safe driving trajectory from the multiple driving trajectories; and

determining (S4-E) the driving trajectory of the vehicle based on the at least one safe driving trajectory.

6. The method according to claim 5, wherein the determining (S4-D) at least one safe driving trajectory from the multiple driving trajectories comprises:

performing collision detection on the multiple driving trajectories based on the dynamic obstacle occupancy map sequence, a plurality of sets of planned driving parameters, and the structural parameters of the vehicle, to obtain collision detection results of the multiple driving trajectories; and

determining the at least one safe driving trajectory from the multiple driving trajectories based on the collision detection results of the multiple driving trajectories.

7. The method according to claim 5, wherein the determining (S4-E) the driving trajectory of the vehicle based on the at least one safe driving trajectory comprises:

determining the driving trajectory of the vehicle from the at least one safe driving trajectory based on a distance between an end trajectory point of the at least one safe driving trajectory and a target driving position of the vehicle.

8. A vehicle driving trajectory prediction apparatus, **characterized by** comprising:

a BEV (Bird's-Eye View) feature map perception module (100), configured for determining, based on a surround-view image sequence acquired by a vehicle within a first preset time period prior to a current time point, a BEV feature map sequence of an environment in which the vehicle is located;

a temporal prediction module (200), configured for predicting, based on the BEV feature map sequence, dynamic obstacles within a second preset time period subsequent to the current time point to obtain a dynamic obstacle occupancy map sequence, wherein the temporal prediction module is further configured for determining a drivable area occupancy map of the vehicle at the current time point based on the BEV feature map sequence; and

a driving trajectory prediction module (300), configured for determining a static environment feature of the vehicle at the current time point based on the BEV feature map sequence, wherein the driving trajectory prediction module (300) is further configured for predicting a driving trajectory of the vehicle based on the dynamic obstacle occupancy map sequence, the drivable area occupancy map, and the static environment feature.

9. The apparatus according to claim 8, wherein the driving trajectory prediction module (300) comprises:

a first image feature determination unit (310), configured for determining a dynamic obstacle image feature sequence based on the dynamic obstacle occupancy map sequence;

a second image feature determination unit (320), configured for determining (S4-2) a drivable area image feature based on the drivable area occupancy map;

a feature concatenation unit (330), configured for performing feature concatenation based on the drivable area image feature and the dynamic obstacle image feature sequence to obtain a concatenated feature sequence; and

a driving trajectory prediction unit (340), configured for determining the driving trajectory of the vehicle based on the concatenated feature sequence and the static environment feature.

10. The apparatus according to claim 9, further comprising:

a lane line information recognition module, configured for recognizing lane line information from the surround-view image sequence,

wherein the temporal prediction module (200) is further configured for determining, based on the BEV feature map sequence and the lane line information, a lane line occupancy map of a road segment in which the vehicle is located at the current time point;

wherein the driving trajectory prediction module (300) further comprise:

a third image feature determination unit (350), configured for determining a lane line image feature based on the lane line occupancy map; and

wherein the feature concatenation unit (330) is configured for concatenating the drivable area image feature and the lane line image feature with a respective one of dynamic obstacle image features in the dynamic obstacle image feature sequence respectively, to obtain the concatenated feature sequence.

11. The apparatus according to claim 9 or 10, wherein the driving trajectory prediction unit (340) is further configured for:

extracting a concatenated feature at a first prediction time point within the second preset time period from the concatenated feature sequence;

acquiring a linear velocity and an angular velocity of the vehicle at the current time point, and acquiring first relative coordinates of a navigation position of the vehicle at the first prediction time point relative to a position of the vehicle at the current time point;

determining first trajectory point coordinate offsets of a predicted driving position of the vehicle at the first prediction time point relative to an actual position of the vehicle at the current time point by performing processing based on the static environment feature, the concatenated feature at the first prediction time point, the first relative coordinates, and the linear velocity and the angular velocity of the vehicle at the current time point;

determining predicted trajectory point coordinates of the vehicle at the first prediction time point based on the first trajectory point coordinate offsets and current coordinates of an actual position of the vehicle at the current time point in a preset coordinate system; and

determining second trajectory point coordinate offsets based on the predicted trajectory point coordinates at the first prediction time point, a concatenated feature at a second prediction time point, and second relative coordinates, wherein the second prediction time point is a prediction time point next to the first prediction time point within the second preset time period, the second relative coordinates are relative coordinates of a third navigation position relative to the second navigation position, the third navigation position is a navigation position of the vehicle at the second prediction time point, and the second trajectory point coordinate offsets are coordinate offsets of a predicted position of the vehicle at the second prediction time point relative to a predicted position of the vehicle at the first prediction time point.

12. The apparatus according to any one of claims 8 to 10, wherein the driving trajectory prediction module (300) comprises:

a planned route determination unit (301), configured for determining a planned trajectory of the vehicle based on the dynamic obstacle occupancy map sequence, the drivable area occupancy map, and the static environment feature;

a collision detection unit (302), configured for performing collision detection on the planned trajectory based on the dynamic obstacle occupancy map sequence and driving parameters and structural parameters of the vehicle to obtain a collision detection result of the planned trajectory;

a driving trajectory planning unit (303), configured for planning multiple driving trajectories for the vehicle based on the collision detection result of the planned trajectory;

a safe driving trajectory determination unit (304), configured for determining at least one safe driving trajectory from the multiple driving trajectories; and

a driving route determination unit (305), configured for determining the driving trajectory of the vehicle based on the at least one safe driving trajectory.

13. The apparatus according to claim 12, wherein the safe driving trajectory determination unit (304) is further configured for:

performing collision detection on the multiple driving trajectories based on the dynamic obstacle occupancy map sequence, a plurality of sets of planned driving parameters, and the structural parameters of the vehicle, to obtain collision detection results of the multiple driving trajectories; and
determining the at least one safe driving trajectory from the multiple driving trajectories based on the collision detection results of the multiple driving trajectories.

14. A non-transitory computer readable storage medium, on which a computer program is stored, **characterized by** that the computer program, when executed by a processor, causes the processor to implement the method according to any one of claims 1 to 7.

15. An electronic device, **characterized by** comprising:

a processor (10); and
a memory (20), configured for storing instructions executable by the processor (10), wherein
the processor (10) is configured for reading the executable instructions from the memory (20), and executing the instructions to implement the method according to any one of claims 1 to 7.

1

| Image Acquisition Apparatus |

2

| Electronic Device |

**FIG. 1**

determining, based on a surround-view image sequence acquired by a vehicle within a first preset time period prior to a current time point, a BEV feature map sequence of an environment in which the vehicle is located ∼S1

predicting, based on the BEV feature map sequence, dynamic obstacles within a second preset time period subsequent to the current time point to obtain a dynamic obstacle occupancy map sequence ∼S2

determining, based on the BEV feature map sequence, a drivable area occupancy map and a static environment feature of the vehicle at the current time point ∼S3

predicting a driving trajectory of the vehicle based on the dynamic obstacle occupancy map sequence, the drivable area occupancy map, and the static environment feature ∼S4

**FIG. 2**

| determining a dynamic obstacle image feature sequence based on the dynamic obstacle occupancy map sequence | ∽ S4-1 |

| determining a drivable area image feature based on the drivable area occupancy map | ∽ S4-2 |

| performing feature concatenation based on the drivable area image feature and the dynamic obstacle image feature sequence to obtain a concatenated feature sequence | ∽ S4-3 |

| determining the driving trajectory of the vehicle based on the concatenated feature sequence and the static environment feature | ∽ S4-4 |

**FIG. 3**

| recognizing lane line information from the surround-view image sequence | ∽ S4-3-1 |

| determining, based on the BEV feature map sequence and the lane line information, a lane line occupancy map of a road segment in which the vehicle is located at the current time point | ∽ S4-3-2 |

| determining a lane line image feature based on the lane line occupancy map | ∽ S4-3-3 |

| concatenating the drivable area image feature and the lane line image feature with a respective one of dynamic obstacle image features in the dynamic obstacle image feature sequence respectively, to obtain the concatenated feature sequence | ∽ S4-3-4 |

**FIG. 4**

extracting a concatenated feature at a first prediction time point within the second preset time period from the concatenated feature sequence ~ S4-4-1

acquiring a linear velocity and an angular velocity of the vehicle at the current time point, and acquiring first relative coordinates of a navigation position of the vehicle at the first prediction time point relative to a position of the vehicle at the current time point ~ S4-4-2

determining first trajectory point coordinate offsets of a predicted driving position of the vehicle at the first prediction time point relative to an actual position of the vehicle at the current time point by performing processing based on the static environment feature, the concatenated feature at the first prediction time point, the first relative coordinates, and the linear velocity and the angular velocity of the vehicle at the current time point ~ S4-4-3

determining predicted trajectory point coordinates of the vehicle at the first prediction time point based on the first trajectory point coordinate offsets and current coordinates of an actual position of the vehicle at the current time point in a preset coordinate system ~ S4-4-4

determining second trajectory point coordinate offsets based on the predicted trajectory point coordinates at the first prediction time point, a concatenated feature at a second prediction time point, and second relative coordinates ~ S4-4-5

**FIG. 5**

**FIG. 6**

| determining a planned trajectory of the vehicle based on the dynamic obstacle occupancy map sequence, the drivable area occupancy map, and the static environment feature | ∼S4-A |

| performing collision detection on the planned trajectory based on the dynamic obstacle occupancy map sequence and driving parameters and structural parameters of the vehicle to obtain a collision detection result of the planned trajectory | ∼ S4-B |

| planning multiple driving trajectories for the vehicle based on the collision detection result of the planned trajectory | ∼ S4-C |

| determining at least one safe driving trajectory from the multiple driving trajectories | ∼ S4-D |

| determining the driving trajectory of the vehicle based on the at least one safe driving trajectory | ∼ S4-E |

**FIG. 7**

Driving Direction Of Vehicle

A  L1  L2
P1  V  B  L3  P2  D1  D2  D3
D5  D4
L4
L5

**FIG. 8**

Vehicle Driving Trajectory Prediction Apparatus

100

200

300

BEV Feature Map Perception Module

Temporal Prediction Module

Driving Trajectory Prediction Module

**FIG. 9**

Driving Trajectory Prediction Module 300

310

330

320

First Image Feature Determination Unit

Feature Concatenation Unit

Second Image Feature Determination Unit

340

Driving Trajectory Prediction Unit

**FIG. 10**

Driving Trajectory Prediction Module 300

310

330

320

First Image Feature Determination Unit

Feature Concatenation Unit

Second Image Feature Determination Unit

350

340

Third Image Feature Determination Unit

Driving Trajectory Prediction Unit

**FIG. 11**

Driving Trajectory Prediction Module 300

301

302

303

Planned Route Determination Unit

Collision Detection Unit

Driving Trajectory Planning Unit

305

304

Driving Route Determination Unit

Safe Driving Trajectory Determination Unit

**FIG. 12**

Electronic Device

Processor 10

Input Means 30

Memory 20

Output Means 40

**FIG. 13**